# EUROPEAN PATENT SPECIFICATION

(11) **EP 3 520 354 B1**
(45) Date of publication and mention of the grant of the patent: **10.03.2021**
(21) Application number: 17780011.7
(22) Date of filing: 12.09.2017
(51) Int. Cl.: H04L 29/06, H04L 29/08, G06F 3/147, G09G 3/00

(54) **AUGMENTED REALITY COMMUNICATION SYSTEM AND AUGMENTED REALITY INTERACTION DEVICE**
SYSTEM ZUR AUGMENTED-REALITY-KOMMUNIKATION UND VORRICHTUNG ZUR AUGMENTED-REALITY-INTERAKTION
SYSTÈME DE COMMUNICATION À RÉALITÉ AUGMENTÉE, ET DISPOSITIF D'INTERACTION À RÉALITÉ AUGMENTÉE

(30) Priority: 30.09.2016 DE 102016118647
(43) Date of publication of application: 07.08.2019
(73) Proprietor: Deutsche Telekom AG, 53113 Bonn (DE)
(72) Inventor: SCHNIEDERS, Dominik, 52078 Aachen (DE); LEDL, Petr, 25101 Ricany (CZ)
(74) Representative: Raible Deissler Lehmann Patentanwälte PartG mbB
(86) International application number: PCT/EP2017/072937
(87) International publication number: WO 2018/059934

(56) References cited:
- US-A1- 2012 190 346
- US-A1- 2015 188 984
- WAGNER D ET AL: "First steps towards handheld augmented reality", WEARABLE COMPUTERS, 2003. PROCEEDINGS. SEVENTH IEEE INTERNATIONAL SYMP OSIUM ON 21-23 OCT. 2003, PISCATAWAY, NJ, USA,IEEE, LOS ALAMITOS, CA, USA, 21 October 2003 (2003-10-21), pages 127-135, XP010673786, DOI: 10.1109/ISWC.2003.1241402 ISBN: 978-0-7695-2034-6
- PIERUCCI LAURA: "The quality of experience perspective toward 5G technology", IEEE WIRELESS COMMUNICATIONS, IEEE SERVICE CENTER, PISCATAWAY, NJ, US, vol. 22, no. 4, 1 August 2015 (2015-08-01) , pages 10-16, XP011667395, ISSN: 1536-1284, DOI: 10.1109/MWC.2015.7224722 [retrieved on 2015-08-25]

## Description

### TECHNICAL FIELD

The present disclosure relates to an augmented reality (AR) communication system with an AR interaction device, a real-time wide area network (WAN) and a back-end computer server for processing reality data to provide AR data. The disclosure further relates to an AR interaction device and a method for providing a user with AR information.

### BACKGROUND

Augmented reality (AR) is a live direct or indirect view of a physical, real-world environment whose elements are augmented (or supplemented) by computer-generated sensory input such as sound, video, graphics or GPS data. It is related to a more general concept called mediated reality, in which a view of reality is modified (possibly even diminished rather than augmented) by a computer. As a result, the technology functions by enhancing one's current perception of reality. By contrast, virtual reality replaces the real world with a simulated one.

AR glasses is an example of an augmented reality device. Such AR glasses may be equipped with a video camera and sensors such as an accelerometer, GPS (global positioning system) and compass to give a user wearing the AR glass assistance while performing day-to-day activities. The AR glasses require a battery for supplying the electronic components of the AR glasses with power. Currently, such AR glasses can be used stand-alone or in combination with a mobile phone, automotive electronics, etc. for powering the AR glasses if necessary. The AR glasses can be connected by cables with the mobile phone, automotive electronics or an external power box for charging the AR glasses. In the stand-along version, a large battery package is required for supporting the charging of the AR glasses. Such battery package has a high weight and a limited life span, currently about 30 minutes before reloading is required. Besides, it makes the design of the AR glasses chunky restraining the user from wearing the glasses. In the wired solution where the AR glasses are connected to a power box by cable, the external power box has to be mounted on the glasses or carried by the user. The cable troubles the user by possible entangling with other objects, in particular when driving a car.

The document "First steps towards handheld augmented reality" of Daniel Wagner et al. describes a stand-alone augmented reality system with self-tracking running on an unmodified personal digital assistant with a commercial camera. The application provides the user with a three-dimensional augmented view of the environment. A marker-based tracking toolkit is used which runs directly on the personal digital assistant. Further, a client/server architecture is described that is based on wireless networking and is able to dynamically and transparently offload the tracking task in order to provide better performance in select areas.

The document "The quality of experience perspective toward 5G technology" of Laura Pierucci describes a QoE estimation method tailored for 5G systems based on a neural network approach.

US 2015/188984 A1 describes a system and a method for offloading augmented reality processing. A sensor external to a viewing device of a user tracks a location and an orientation of the viewing device. The location and orientation are defined relative to predefined references of a physical environment local to the user. A server receives a request from the viewing device to offload at least one of a tracking process and an augmented reality rendering process.

### SUMMARY

It is the object of the invention to provide a solution for an AR device such as AR glasses that avoids the above described problems, in particular to provide an AR device that requires less power than currently available AR devices.

This object is achieved by the features of the independent claims. Further implementation forms are apparent from the dependent claims, the description and the figures.

A basic idea of the invention is to shift processing of the reality data (at least partially) from the AR device to a back-end computer server in order to release the AR device from power intensive processing tasks. Such shifting of the processing tasks saves the battery of the AR device resulting in longer stand-by times. The shifting is realized by a low-latency wide area network, e.g. a 5G network that guarantees real-time transfer between the AR device and the back-end computer server, i.e. transfer within a maximum time of about 10 milliseconds.

In order to describe the invention in detail, the following terms, abbreviations and notations will be used:
- AR:: Augmented Reality
- WAN:: Wide Area Network
- 5G:: fifth generation mobile network
- LTE: Long Term Evolution

Methods and devices according to the disclosure describe augmented reality (AR) devices, in particular AR glasses. AR glasses can be distinguished in "See-Through Glasses" und "Look-To Glasses". In the following "See-Through Glasses" are further described. AR Glasses superimpose virtual image or picture elements with real world view. The virtual image fits with spatial image according to contact analogy and display in depth. Often there is a reference between the virtual image and the real image.

In an automotive context AR glasses can be used while driving. AR glasses can be subject to the following use cases or application scenarios:
- Replacement of (large area) Head-Up display as space in the vehicle due to space in instrument panel is very limited (Field of View, size of the display).
- Display speed, warning messages, card inserts, entertainment, infotainment, etc.
- X-ray: Look through automobile body as with X-ray vision; use of cameras, complex calculations for deviating parallax (Camera Vector, head position, eye direction vector).
- Fog view.
- Contact analogy
- Navigation: place arrows on road so that they point right there on the diversion point where you have to turn; track colorize on the one track (like a red carpet) which guides to the destination.
- Pols (points of Interest): Call-up, marking, etc. for Pol (individually adjustable, depending on interests, for example gas stations, attractions.
- Relevant driving information labeling (FAS): preceding vehicle, which is detected with ACC, free parking, the parking area; Mobility Services: car, marking of a free parking lot symbolized by hand from above; danger spots (traffic jam, ice, leaves, lane restrictions, etc.); dangerous driving situations / warnings / information: risk of collision with other vehicles, road users (intersection assistant, turning assistant, lane changing assistant, marking pedestrians, cyclists, etc.); information that is not on the sensor system of the ego vehicle can be detected in the vehicle (extension of electronic horizon over mobile / C2C Communication); What's in front of e.g. driving ahead vices, behind curves, fog view, ghost driver.
- Revolution interior; Replacement screens instruments and controls as buttons / switches, virtual overlay of information / controls; operation is detected on camera glasses & control signal transfer.

In a context outside the vehicle but in interaction with the vehicle AR glasses can be subject to the following use cases or application scenarios:
Repair / Maintenance / Information / Training; Data glasses with contact analog instructions / information / specifically online for very large data base; Pedestrian navigation, see above for variants, contact analog; Pol (see above); show relevant information "mobility assistant", for example, warning of vehicles, etc., (see above, only in reverse for pedestrians).

In a non-automotive context AR glasses can be used without a vehicle. AR glasses can be used of course for many use cases without a vehicle, in particular where the user acts in reality and needs additional information and, at best, contact analogy. AR glasses can be subject to the following use cases or application scenarios:
- Medicine: medical dressing, tablets, surgery, etc.
- cooking: food preparation, cutting, adding ingredients.
- Private client: construction / installation of any things, cabinet, tent, etc.
- Fitter: building machine, heating, etc.; Maintenance machine, heating, etc.; repair machine, heating, etc.
- Gaming in reality (especially short latency important)
- Virtual meetings (especially short latency for image transfer important)
- Many, many more.

AR glasses can be used to solve the following problems: Head tracking, Eye Tracking (optional), image processing, calculating a new image to be displayed, e.g. a flat image (2D) or a dimensional image (3D) with two glasses, rendering new image.

AR glasses may include the following components: optics (virtual image), camera, sometimes infrared sensors (infrared markers in reality), sometimes passive / active infrared reflectors in glasses (in Outside-In Head Tracking Method), 9-axis inertial sensors: Gyro, Accelerator, magnetometer, WiFi, Bluetooth Low Energy (BLE), electronics: printed circuit board (PCB) with microprocessor (uP), GPU, I/O, sensor systems, etc., battery, housing, special glasses (specially honed for extracting the image at respective point in glasses).

According to a first aspect, the invention relates to an augmented reality (AR) communication system, comprising: an AR interaction device configured to capture reality data; a back-end computer server configured to process at least part of the reality data to provide augmented reality (AR) data; and a real-time wide aream network (WAN) coupled between the AR interaction device and the back-end computer server, wherein the real-time WAN is configured to transfer the at least part of the captured reality data to the back-end computer server and return the AR data to the AR interaction device in real-time, wherein the AR interaction device is configured to provide a user of the AR interaction device with information based on the reality data enriched with the AR data.

Such an AR communication system provides the advantage that complex processing tasks can be outsourced to the back-end computer server which saves power in the AR interaction device. Thus, the interaction device can be implemented with a smaller battery package or a loading of the battery lasts longer or higher processing tasks can be implemented in the AR interaction device. This is achieved by using a real-time wide area network (WAN) which guarantees for low latencies which are required for all processing tasks in the interaction device such as AR glasses, AR mobile devices, AR smart phones, virtual reality devices or other AR devices. Due to the wide area network data transfer, high processing power computer servers and/or computer server systems can be utilized which are able to solve a processing task in fractions of a millisecond or even microsecond.

In an implementation form of the AR communication system the WAN is a multi-hop network comprising multiple network nodes (e.g. routers and gateways, etc.) in a network path between the AR interaction device and the back-end computer server.

This provides the advantage that the wide area network spans a large geographical area, for example a data link between cities or between different countries, hence back-end power around the world can be used if necessary for processing a complex processing task of the AR device.

In an implementation form the AR communication system comprises a 5G communication network coupled between the AR interaction device and the back-end computer server to implement the real-time WAN.

The 5G communication network provides ultra-low latencies smaller than one millisecond. This can be utilized to implement an ultra-low latency WAN which guarantees real-time transfer and real-time processing of complex computation tasks in the back-end server.

In an implementation form of the AR communication system the real-time WAN is a low-latency data network having a latency in a range of about 1 milliseconds to about 10 milliseconds.

Such a low-latency data network facilitates new partitioning of tasks between AR device and back-end computer server. Shifting processing of the reality data (at least partially) from the AR device to the back-end computer server releases the AR device from power intensive processing tasks and hence saves the battery of the AR device resulting in longer stand-by times.

In an implementation form of the AR communication system the AR interaction device comprises a controller configured to control the transfer of the at least part of the captured reality data to the back-end computer server and to control reception of the returned AR data, and the controller is further configured to control providing the user with the information based on the reality data enriched with the AR data.

Such controller provides the advantage that application-specific allocation of processing tasks to either the AR device or the back-end computer server can be provided. The controller can control which tasks are provided to the back-end computer server.

In an implementation form of the AR communication system the AR interaction device comprises a processor configured to pre-process the captured reality data before providing it to the back-end computer server and/or to post-process the returned AR data before providing it to the user.

Such processor provides the advantage that only highly complex processing tasks for processing the reality data, e.g. image processing algorithms or coding algorithms, are sourced out to the back-end computer server while low complex processing tasks can be performed by the AR device.

In an implementation form of the AR communication system the AR interaction device comprises AR glasses configured to capture a real image and to provide the user with the real image augmented by a virtual image which is provided by the back-end computer server based on the real image.

This provides the advantage that the above described use cases for the AR glasses, in particur use cases related to real-time data processing, real-time navigation, real-time X-raying, real-time driving assistance, real-time head tracking, real-time cooking, real-time gaming, real-time repair of machines, real-time surgery, etc. can be implemented on the AR communication system.

In an implementation form of the AR communication system the AR glasses comprise a screen configured to display the real image augmented by the virtual image as an AR image.

This provides the advantage that the user can perceive the real world enriched by useful assistance information on the screen to facilitate analysis of perception.

In an implementation form of the AR communication system the AR glasses comprise a processor configured to pre-process the real image based on feature extraction and to provide the extracted features to the back-end computer server, and the processor is further configured to render the AR image before displaying it on the screen.

This provides the advantage that pre-processing and post-processing can reduce the amount of data to be transferred to the back-end server.

In an implementation form of the AR communication system the back-end computer server is configured to process the real image with respect to head and body tracking to provide a stable AR image.

This provides the advantage that the interaction device, in particular the AR glasses can be released from the very complex computing of head and body tracking. Hence, a stable AR image can be provided at the screen with low processing power in the AR glasses.

In an implementation form of the AR communication system the back-end computer server is configured to process the reality data by using at least one of the following tools: image recognition tools, image data processing tools, image marking tools, artificial intelligence tools, data base tools, satellite navigation tools.

This provides the advantage that the AR device is released from creating resources dedicated to these various processing tasks.

In an implementation form of the AR communication system the captured reality data comprises at least one of the following data: data streams, data samples, video streams, single images, ultrasonic streams, infrared streams, temperature data, pressure data, gyroscope data, accelerometer data, magnetometer data.

This provides the advantage that a variety of different reality data can be achieved by the AR device. Depending on the context, different processing of the back-end server can be requested by the AR device.

In an implementation, the AR communication system comprises at least one second AR interaction device configured to capture at least one second reality data, wherein the real-time WAN is configured to transfer at least part of the captured at least one second reality data to the back-end computer server, wherein the back-end computer server is configured to process at least part of the at least one second reality data to provide at least one second augmented reality (AR) data, wherein the AR interaction device is configured to provide the user with information based on the reality data enriched with the AR data and further enriched with the at least one second reality data and/or the at least one second AR data.

This provides the advantage that the user can be supported with information from other objects that may also be transported with low latency via the WAN. Hence, the AR communication system supports interaction with low latency with other objects around the AR interaction device. These objects can be mobile objects interacting with the user of the interaction device, seeing and performing interaction synchronously, by using the low-latency WAN. For example different user wearing AR glasses are supported to interact with each other, e.g. with virtual or overlayed virtual object over a real object.

According to a second aspect the invention relates to an AR interaction device for providing a user with augmented reality (AR) information, the AR interaction device comprising: a processor configured to capture reality data; and a data interface configured to couple the processor with a back-end computer server via a real-time wide area network (WAN) for transferring at least part of the reality data to the back-end computer server and receiving augmented reality (AR) data derived from the at least part of the reality data in real-time, wherein the processor is configured to provide the user with information based on the reality data enriched with the AR data.

Such an AR interaction device provides the advantage that complex processing tasks can be outsourced to the back-end computer server which saves power in the AR interaction device. Thus, the interaction device can be implemented with a smaller battery package or a loading of the battery lasts longer or higher processing tasks can be implemented in the AR interaction device. This is achieved by coupling of the AR interaction device via the data interface with a real-time wide area network (WAN) which guarantees for low latencies in data transfer to the back-end server. Due to the wide area network data transfer, high processing power computer servers and/or computer server systems that are located in a geographical distance, e.g. in another city or country, can be utilized which are able to solve a processing task in fractions of a millisecond or even microsecond.

In an implementation form the AR interaction device comprises AR glasses configured to capture a real image and to provide the user with the real image augmented by a virtual image which is provided by the back-end computer server based on the real image.

These AR glasses provide the advantage that the above described use cases for the AR glasses, in particur use cases related to real-time data processing, real-time navigation, real-time X-raying, real-time driving assistance, real-time head tracking, real-time cooking, real-time gaming, real-time repair of machines, real-time surgery, etc. can be implemented.

In an implementation form of the AR interaction device, the data interface is further configured to receive at least one second reality data and/or at least one second AR data of at least one second AR interaction device, and the processor is configured to provide the user with information based on the reality data enriched with the AR data and further enriched with the at least one second reality data and/or the at least one second AR data.

This provides the advantage that the user can be supported with information from other objects that may also be transported with low latency via the WAN. Hence, the AR interaction device supports interaction with low latency with other objects, e.g. other users wearing AR glasses, around the AR interaction device. These objects can be mobile objects interacting with the user of the interaction device, seeing and performing interaction synchronously, by using the low-latency WAN. For example different user wearing AR glasses are supported to interact with each other, e.g. with virtual or overlayed virtual object over a real object.

According to a third aspect, the invention relates to a method for providing a user with augmented reality (AR) information, the method comprising: capturing reality data by an AR interaction device; transferring at least part of the captured reality data to a back-end computer server in real-time via a real-time wide area network (WAN); processing the at least part of the reality data by the back-end computer server to provide AR data; transferring the AR data to the AR interaction device in real-time via the real-time WAN; and providing the user with information based on the reality data enriched with the AR data.

By using such method processing of the reality data can be shifted or outsourced (at least partially) from the AR interaction device to the back-end computer server in order to release the AR device from power intensive processing tasks. Such shifting of the processing tasks saves the battery of the AR device resulting in longer stand-by times. The shifting is realized by a low-latency wide area network, e.g. a 5G network that guarantees real-time transfer between the AR device and the back-end computer server, i.e. transfer within a maximum time of about 10 milliseconds.

### BRIEF DESCRIPTION OF THE DRAWINGS

Further embodiments of the invention will be described with respect to the following figures, in which:
Fig. 1 shows a schematic diagram illustrating an augmented reality (AR) communication system 100 according to a first possible implementation.
Fig. 2 shows a schematic diagram illustrating an augmented reality (AR) communication system 200 according to a second possible implementation.
Fig. 3 shows a schematic diagram illustrating a method for providing a user with augmented reality (AR) information according to the disclosure.
Fig. 4 shows a schematic diagram illustrating an augmented reality (AR) communication system 400 according to a third possible implementation.
Fig. 5 shows a schematic diagram illustrating an exemplary message flow 500 within elements of the AR communication system of Fig. 4.

### DETAILED DESCRIPTION OF EMBODIMENTS

In the following detailed description, reference is made to the accompanying drawings, which form a part thereof, and in which is shown by way of illustration specific aspects in which the disclosure may be practiced. It is understood that other aspects may be utilized and structural or logical changes may be made without departing from the scope of the present disclosure. The following detailed description, therefore, is not to be taken in a limiting sense, and the scope of the present disclosure is defined by the appended claims.

It is understood that comments made in connection with a described method may also hold true for a corresponding device or system configured to perform the method and vice versa. For example, if a specific method step is described, a corresponding device may include a unit to perform the described method step, even if such unit is not explicitly described or illustrated in the figures. Further, it is understood that the features of the various exemplary aspects described herein may be combined with each other, unless specifically noted otherwise.

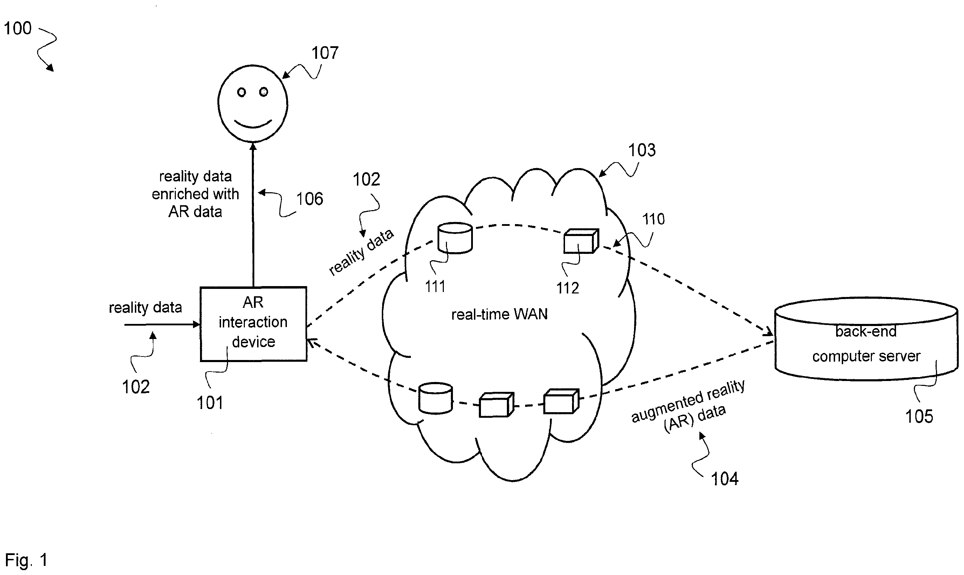

Fig. 1 shows a schematic diagram illustrating an augmented reality (AR) communication system 100 according to a first possible implementation.

The AR communication system 100 includes an AR interaction device 101, a real-time wide area network (WAN) and a back-end computer server 105. The AR interaction device 101 is configured to capture reality data 102. The back-end computer server 105 is configured to process at least part of the reality data 102 to provide augmented reality (AR) data 104. The real-time wide area network (WAN) 103 is coupled between the AR interaction device 101 and the back-end computer server 105. The real-time WAN 103 is configured to transfer the at least part of the captured reality data 102 to the back-end computer server 105 and return the AR data 104 to the AR interaction device 101 in real-time. The AR interaction device 101 is configured to provide a user 107 of the AR interaction device 101 with information 106 based on the reality data 102 enriched with the AR data 104.

The WAN 103 may be a multi-hop network including multiple network nodes 111, 112, e.g. routers or gateways in a network path 110 between the AR interaction device 101 and the back-end computer server 105. In an implementation, the real-time WAN 103 may be implemented by a 5G communication network that may be coupled between the AR interaction device 101 and the back-end computer server 105. The real-time WAN 103 is a low-latency data network that may have a latency in a range of about 1 milliseconds to about 10 milliseconds.

The AR interaction device 101 may include a controller configured to control the transfer of the at least part of the captured reality data 102 to the back-end computer server 105 and to control reception of the returned AR data 104. The controller may further control providing the user 107 with the information 106 based on the reality data 102 enriched with the AR data 104.

The AR interaction device 101 may include a processor 203 configured to pre-process the captured reality data 102 before providing it to the back-end computer server 105 and/or to post-process the returned AR data 104 before providing it to the user 107.

In an implementation form the AR interaction device 101 is or may include AR glasses configured to capture a real image 102 and to provide the user 107 with the real image 102 augmented by a virtual image 104 which is provided by the back-end computer server 105 based on the real image 102. The AR glasses may be designed as describe above in the background section. The AR glasses may include a screen configured to display the real image 102 augmented by the virtual image 102 as an AR image 106. The AR glasses may include a processor configured to pre-process the real image 102 based on feature extraction and to provide the extracted features to the back-end computer server 105. The processor 203 may render the AR image 106 before displaying it on the screen. The back-end computer server 105 may process the real image 102 with respect to head and body tracking to provide a stable AR image 106.

The back-end computer server 105 may process the reality data 102 by using one or more of the following tools: image recognition tools, image data processing tools, image marking tools, artificial intelligence tools, data base tools, satellite navigation tools.

The captured reality data 102 may include one or more of the following data: data streams, data samples, video streams, single images, ultrasonic streams, infrared streams, temperature data, pressure data, gyroscope data, accelerometer data, magnetometer data.

The AR communication system 100 may further include at least one second AR interaction device configured to capture at least one second reality data, wherein the real-time WAN is configured to transfer at least part of the captured at least one second reality data to the back-end computer server, wherein the back-end computer server is configured to process at least part of the at least one second reality data to provide at least one second augmented reality (AR) data, wherein the AR interaction device 101 is configured to provide the user 107 with information 106 based on the reality data 102 enriched with the AR data 104 and further enriched with the at least one second reality data and/or the at least one second AR data.

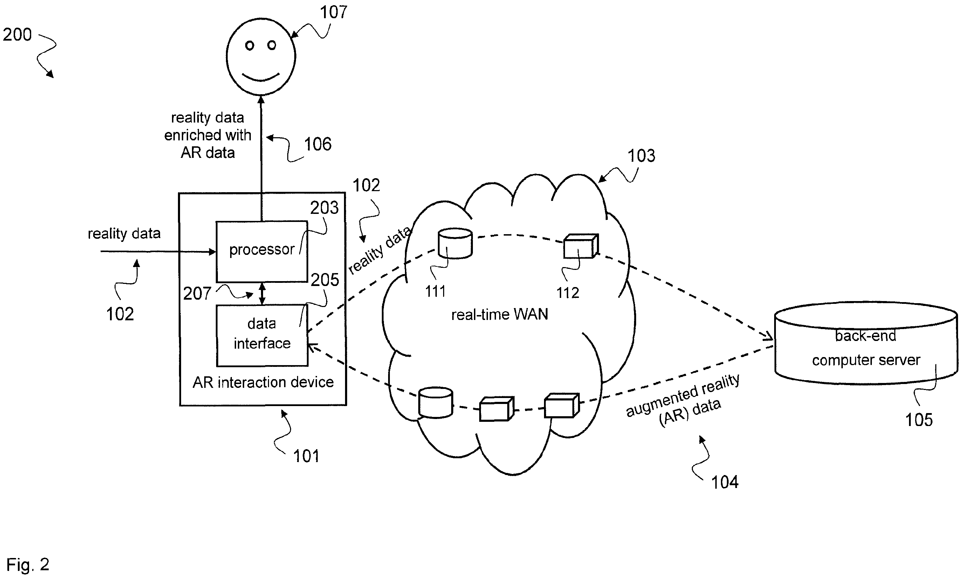

Fig. 2 shows a schematic diagram illustrating an augmented reality (AR) communication system 200 according to a second possible implementation. The AR communication system 200 corresponds to the AR communication system 100 as described above with respect to Fig. 1. In Fig. 2, an exemplary design of the AR interaction device 101 is presented.

Such an AR interaction device 101 for providing a user 107 with augmented reality (AR) information 106 includes a processor 203 and a data interface 205. The processor 203 is configured to capture reality data 102. The data interface 205 is configured to couple the processor 203 with the back-end computer server 105 via the real-time wide area network (WAN) for transferring at least part of the reality data 102 to the back-end computer server 105 and receiving augmented reality (AR) data 104 derived from the at least part of the reality data 102 in real-time. The processor 203 is configured to provide the user 107 with information 106 based on the reality data 102 enriched with the AR data 104.

The AR interaction device may be or may include AR glasses which are configured to capture a real image 102 and to provide the user 107 with the real image 102 augmented by a virtual image 104. The virtual image 104 is provided by the back-end computer server 105 based on the real image 102.In the following an exemplary implementation with AR glasses using server-side processing of data for relieving processing load from AR glasses is described.

Data processing of the glasses can be relocated partially or completely into the backend / server side. This requires minimal latency in the transmission (e.g. 1 to a few milliseconds). A 5G module may be located in the glasses to guarantee this ultra-low latency. Transmission and processing of data can be discriminated in processing all or almost completely in the backend and partial processing in the back end with data preprocessing in the glasses.

With respect to processing all or almost completely in the backend, the following may apply: transfer of the "raw data" (camera data) to the backend; potentially clever, low latency, low power compression / reduction of data; Processing of data for determining the position of the head; Processing of data from the environment, new position of other objects. An alternative is to potentially render the image to be superimposed and to transfer to glasses by rendering the image in the glasses; Transmission of relevant data (for example, changing the head position changes in object positions, etc.). Based on the transmitted data the glasses generate and render the new image.

With respect to partial processing in the back end with data preprocessing in the glasses, the following may apply: Pre-processing of data in the glasses (for example, feature extraction); Transfer of the pre-processed data to the backend; processing of data in the backend; retransmission of the result to the glasses, the AR glasses render the new image.

With respect to transmission and server-side processing, the following may apply: transfer takes place with minimum latency due 5G process; processing in the backend can be done with high-performance computers to keep the processing time minimal; Algorithmics can be better than on the glasses; Functionality can be better than on glasses (for example, parallax calculation); data can be transferred with very low power (to be better than the power consumption of the processing in the glasses); data rate can be sufficiently high for image transfer (preferably uncompressed, otherwise with very fast methods of image compression / decompression); When processing in the back end processing with artificial markers can be avoided; Complex feature detection / extraction tools from video image by high-performance computers with specialized image processing possible

With respect to server -side support for AR Glasses in the automotive context, the following applies: Low latency enables use cases with glasses; rapid response to environmental change. The following use cases apply: For example a road user uses or carries GPS & 5G module and signals position; Server-side real-time determination of the position of all road users; Server-side real-time threat detection (trajectories of all road users); Warning on critical road users.

AR devices and in particular AR glasses according to the disclosure reduce power consumption in glasses and other AR devices, e.g. by the following features: Smaller battery, reduced weight (today approx 135g for AR glasses, the target is under 85g), better package and design due to smaller battery, battery runtime is considerably longer than today (today: ca. 20-30 minutes), Real-time processing with extremely fast backend / Communication Architecture.

Hence, AR devices and in particular AR glasses according to the disclosure provide extremely fast, low-latency data processing in the back end (e.g. edge computing) instead of the glasses, very low latency (e.g. a few milliseconds) and retain sufficient data rate. AR devices and in particular AR glasses according to the disclosure have a low power consumption (less than in common AR glasses) for data transmission.

AR glasses according to the disclosure provide real-time head tracking in the back-end. AR glasses display external objects in real time in the glasses. In one implementation, a Fog Wizard indicates vehicles ahead with AR despite thick fog. The position of the preceding vehicles is transmitted with minimum latency to the server and then further processed as described above. Rendering of the glasses superimposition image can be in the back-end, e.g using Backend / preprocessing. Data can be transferred to the glasses and displayed in the glasses.

Real-time interaction can be applied to provide high-performance processing in the backend in real time, as described in the following: The data stream or a single image of the data source can be transmitted live with minimal latency over the backend. Complex processing of data is performed in the back with high performance computing / specialized software with minimal processing time and/or latency. Transfer of the result to the glasses (or alternatively, the already rendered image) can be provided as described above. The results can be represented in the glasses.

AR glasses as described in this disclosure can be applied for real-time surgery as described in the following: Transmission of video streams from glasses of the surgeon to the backend; Image processing in the back end with calculation of all significant parameter for the operation, e.g. cutting line, atmospheres such as arteries, proposal / recognition / check of surgical tools; Transmission of the result to the glasses with minimal latency; Presentation in glasses: cut line superimposed onto patient, display of the correct surgical instrument, Labeling of dangerous regions; Emergency procedures for "non-doctors" (simplified as described above);

AR glasses as described in this disclosure can be applied for real-time repair of complex machines as described in the following: Real-time repair of complex machines, like real-time surgery, with instructions for maintenance / repair of the machine, e.g. proper tool, action to be performed with optical superimposition to real machine (e.g. rotary movement to the right place with screwdriver).

AR glasses as described in this disclosure can be applied for real-time gaming as described in the following: A gaming engine in the back-end: Optimal by high performance computing / memory; calculation of the virtual image of the game in the back-end; Minimal latency is required (see also above).

AR glasses as described in this disclosure can be applied for real-time cooking as described in the following: image recognition in the backend for all ingredients / tools / etc.; Pictorial superimposition on reality for all activities while cooking; many more use cases may be provided based on this principle. Such use cases can support both experts and "beginners".

Data sources for real-time interaction can be applied as described in the following. These data sources can include different data sources, e.g. both, recording per each stream or per frame. For example, video stream, frames, ultrasonic stream, infrared Stream, inertial sensors (gyroscope, accelerometer, magnetometer), temperature, pressure, etc.

An AR system may hence include: data glasses; backend with high-performance processing, which is not possible in glasses and minimal latency which enables new partitioning. Such an AR system allows exploiting the above-described use cases, as high-performance processing in glasses is not or only partially possible due to limited resources. Besides, battery consumption is reduced by processing in the back-end (trade off to capacity).

Such an implementation of an AR communication system with the above described AR glasses provides the following advantages: Very small latencies can be realized in the overall system due to the back-end processing. Each frame can be updated with changes. For example the following frame properties for graphics processing can be realized: frames per sec (min - "max"): 25 - 60 - 100 with tolerable latencies over all in milliseconds: 40 - 16-10. This can be achieved due to the following features: Contact analogy (virtual image with a real image superimposed does not wobble or shake, it is world-fixed, e.g. like a pole. In HUD the virtual image is stable at a position to the vehicle position (e.g. car fixed) and does not wobble or tremble. Shaking and/or tremors due to micro head movements (e.g. by vibration of the car, fluctuations of the head) can be adjusted. Redrawing the image needs to be very fast in order to achieve the stableness of the virtual image fixed to car or world, e.g. on rotation or tilt of the head. The balance of the movements of the head or the movement of the body (e.g. in the car) or the movement of objects outside the vehicle or the world, which is one of the most difficult tasks to achieve a high quality, can be solved by using the AR system according to the disclosure.

Another aspect relates to interaction of different AR interaction devices as described in the following.

The data interface 205 may further receive second reality data or second AR data of a second AR interaction device, e.g. AR glasses of a second user. The processor 203 may provide the user 107 with information 106 based on the reality data 102 enriched with the AR data 104 and further enriched with the second reality data or the second AR data. Here, the user can be supported with information from other objects that may also be transported with low latency via the WAN. I.e. the AR interaction device supports interaction with low latency with other objects, e.g. other users wearing AR glasses, around the AR interaction device. These objects can be for example mobile objects interacting with the user of the interaction device, seeing and performing interaction synchronously, by using the low-latency WAN. For example different users wearing AR glasses are supported to interact with each other, e.g. with virtual or overlayed virtual object over a real object.

According to this aspect described above, low latency and involvement of the backend is supported by providing information from other objects (also transported with low latency) to the user of the AR interaction device. In the following, exemplary implementations are described.

If the user drives with his car in the fog he cannot see the cars in front of him. The AR interaction system according to the disclosure facilitates the user that the cars in front of him (or other objects) communicate their highly precise position, accereration, car type, routing, etc. with 5G to the back-end server. In the back-end server this information can be enriched or directly sent to the user's AR interaction device, e.g. his AR glasses (again with 5G or real-time WAN). With that information it is possible to draw the virtual image of the other car at the right position. With that an AR "fog view" can be achieved. The concept is to interact with low latency with other objects around the user (these objects can be mobile with the real-time WAN). In a further implementation, two people wearing AR glasses with low latency may interact with a virtual or overlayed virtual object over a real object, seeing and performing interaction synchronously. I.e., the AR interaction system enables low latency interacting of/with different objects and persons wearing AR glasses (or using AR interaction devices).

The AR interaction devices may include a variety of different devices, e.g. AR glasses and others as described above. For example, an AR interaction device may be an AR device with e.g. wearables, that helps the user e.g. for guiding. For example two armwrists that give the user an impulse/vibrate in order to navigate him through a room. This can be done with a low latency network such as the WAN or 5G network and wearables as AR substitute. This may be a guide that takes the user by the hand and leads him along his way.

That means, other AR input / output devices can be combined with low latency with the own AR interaction device. The advantages of low latency with backend computing are the same as for the AR glasses implementations described above. But of course the interaction devices may be different.

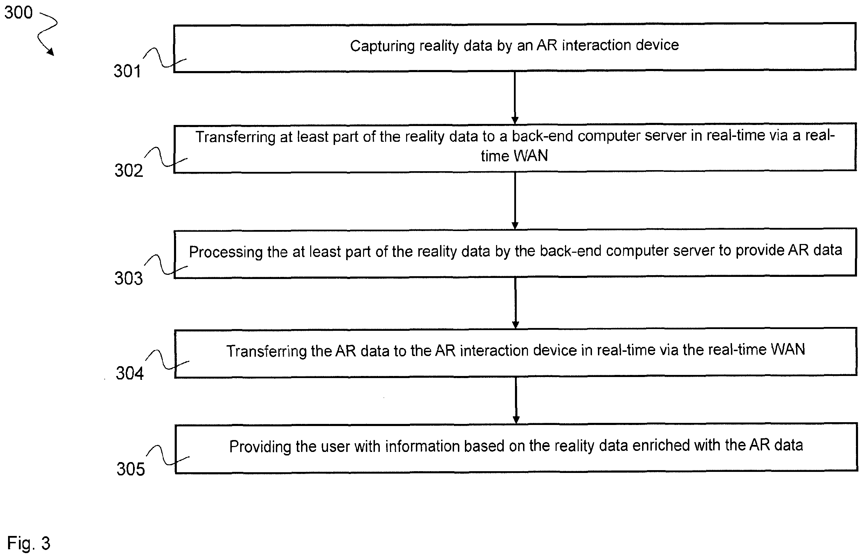

Fig. 3 shows a schematic diagram illustrating a method for providing a user with augmented reality (AR) information according to the disclosure.

The method 300 includes capturing 301 reality data by an AR interaction device, e.g. an AR interaction device 101 as described above with respect to Figures 1 and 2. The method 300 includes transferring 302 at least part of the captured reality data to a back-end computer server, e.g. a server 105 as described above with respect to Figures 1 and 2, in real-time via a real-time wide area network (WAN), e.g. by using a real-time WAN as described above with respect to Figures 1 and 2. The method 300 includes processing 303 the at least part of the reality data by the back-end computer server to provide AR data, e.g. as described above with respect to Figures 1 and 2. The method 300 includes transferring 304 the AR data to the AR interaction device in real-time via the real-time data network, e.g. as described above with respect to Figures 1 and 2. The method further includes providing 305 the user with information based on the reality data enriched with the AR data, e.g. as described above with respect to Figures 1 and 2. The method 300 may be implemented in a system 100, 200 or 400 as described with respect to Figures 1, 2 and 4, 5.

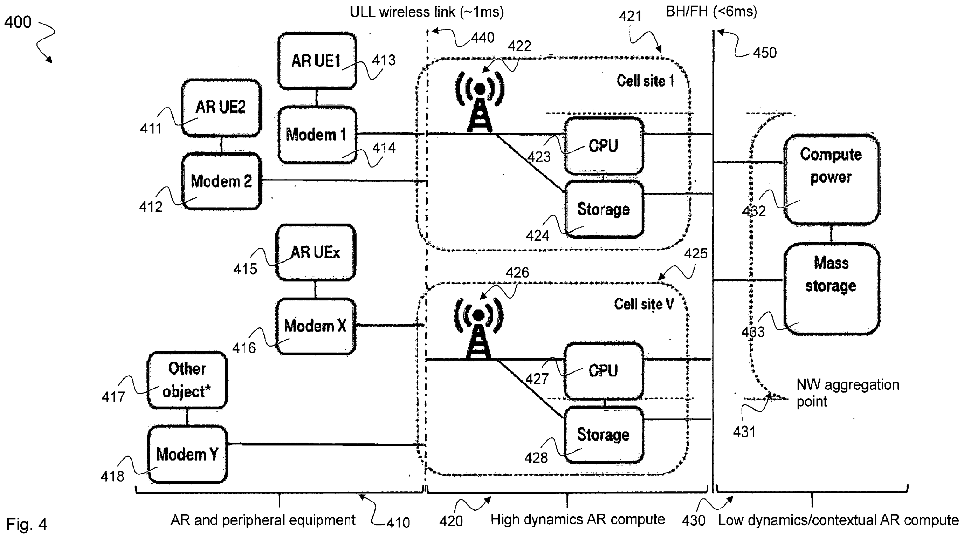

Fig. 4 shows a schematic diagram illustrating an augmented reality (AR) communication system 400 according to a third possible implementation.

The system 400 is divided in three parts, an AR and peripheral equipment part 410, a high dynamics AR compute part 420 and a low dynamics and contextual AR compute part 430. The first part 410 is coupled with the second part 420 via an ultra-low lantency (ULL) wireless link 440 with a latency of about one millisecond. The second part 420 is coupled with the third part 430 via an BH/FH interface link 450 with a latency smaller than six milliseconds. In the first part 410 of the system, the various AR user equipments (UE) 413, 411, 415 are located each one using a respective modem 414, 412, 416 to couple the AR UE 413, 411, 415 to the ULL wireless link 440. Additionally, other objects 417 such as cameras, cars, persons or sensors can be located in the first part 410 each one having a respective modem 418 for connection to the ULL wireless link 440.

The second system part 420 includes a plurality of cell sites 421, 425 each one including a radio cell 422, 426, e.g. a base station for receiving data, e.g. reality data 102 as described above with respect to Figures 1 and 2, from the modems 414, 412, 416, 418 and for transmitting processed data, e.g. AR data 104 as described above with respect to Figures 1 and 2, to the modems 414, 412, 416, 418. In each cell site 421, 425 a central processing unit (CPU) 423, 427 and a storage device 424, 428 such as a data base is associated, e.g. collocated with the respective radio cell 422, 426 for processing the data received by the cell site 421, 425 from the respective AR UE 413, 411, 415 or the other objects 417. The CPUs and storage devices provide means for high dynamics AR computation of the receive data with ultralow latency, e.g. within one millisecond and to return AR data to the AR UEs 413, 411, 415 and the other objects 417 within the same ultralow latency. The CPUs may be used to process reality data decompression, image frame processing, position and orientation estimation, image processing and overlay image generation, image file wrapping and compression of AR data.

The third system part 430 includes a network aggregation point or node 431 with a compute power device 432 and an associated mass storage device. The network aggregation point 431 is coupled via the BH/FH interface with the various cell sites 421, 425 of the second system part 420 in order to assist computation. The compute power device 432 provides means for low dynamics and contextual AR computation within low latency of about less than six milliseconds. The compute power device 432 may for example be used to perform low dynamics and/or contextual AR computation tasks, e.g. context update processing and position or orientation estimation.

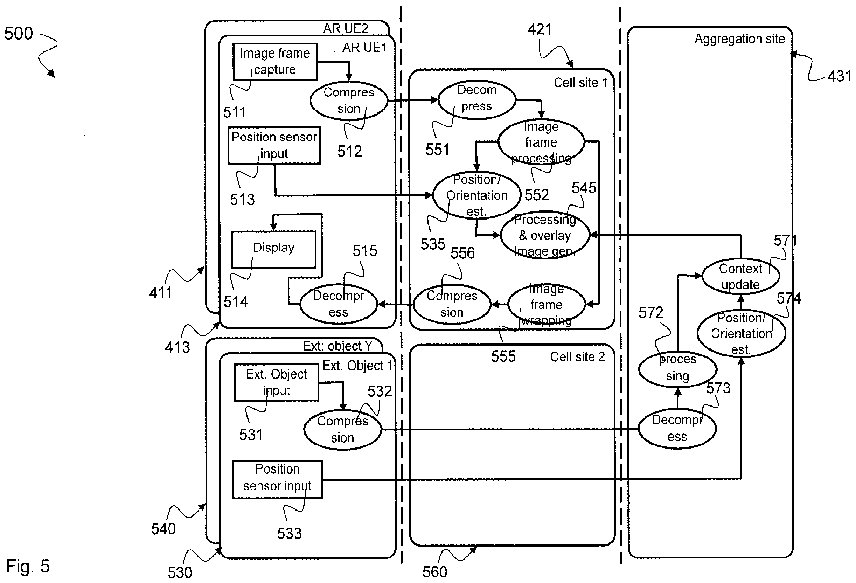

Fig. 5 shows a schematic diagram illustrating an exemplary message flow 500 within elements of the AR communication system of Fig. 4.

In the AR UE1 413 such a message flow may include image frame capture 511 and compression 512 before transmitting the compressed image via the ULL wireless link 440 to the first cell site 421. The message flow in AR UE1 413 may include position sensor input 513 and transmitting these position sensor data via the ULL wireless link 440 to the first cell site 421. The message flow in AR UE1 413 may further include decompressing 515 AR data received via the ULL wireless link 440 from the first cell site 421 and displaying 514 this AR data.

In cell site 1 421 the message flow may include decompressing 551 data received from compression module 512 of AR UE1 413 and providing this decompressed data to an image frame processing module 552. Output data of the image frame processing module 552 is provided to a position/orientation estimation module 535 which also receives data from the position sensor input module 513 to estimate position and orientation of the AR UE1 413. The output of this position/orientation estimation module 535 is provided to a processing and overlay image generation module 545 to enrich the image by an overlay image. The output of module 545 is provided together with the output of module 552 to an image frame wrapping module 555 for performing image frame wrapping and passing the wrapped data to compression module 556 compressing this data for transmission via the ULL wireless link 440 todecompression moduel 515 of AR UE1 413.

External object 1 530 includes external object input module 531 receiving input data, e.g. reality data 102 as described above with respect to Figures 1 and 2. The input data is compressed in compression module 532 and transferred via ULL wireless link 440 and BH/FH link 450 to network aggregation site 431. Position data sensed by position sensor input module 533 is also transferred via ULL wireless link 440 and BH/FH link 450 to network aggregation site 431.

Network aggregation site 431 includes a decompression module 573 for decompressing data delivered by compression module 532 of external object 1, a processing module 572 for processing this decompressed data, a position/orientation estimation module 574 for estimating position and/or orientation based on the position data received by the position sensor input module 533 of external object 1, and a context update module 571 for updating the context based on the provided data of processing module 572 and position/orientation estimation module 574. The context update is transferred via BH/FH link 450 to the processing & overlay image generation module 545 of cell site 1 to enrich the processed image with information related to the external object 1 and the position / orientation data received from external object 1.

The methods, systems and devices described herein may be implemented as electrical and/or optical circuit within a chip or an integrated circuit or an application specific integrated circuit (ASIC). The invention can be implemented in digital and/or analogue electronic and optical circuitry.

The methods, systems and devices described herein may be implemented as software in a Digital Signal Processor (DSP), in a micro-controller or in any other side-processor or as hardware circuit within an application specific integrated circuit (ASIC) of a Digital Signal Processor (DSP).

The invention can be implemented in digital electronic circuitry, or in computer hardware, firmware, software, or in combinations thereof, e.g. in available hardware of conventional optical transceiver devices or in new hardware dedicated for processing the methods described herein.

The present disclosure also supports a computer program product including computer executable code or computer executable instructions that, when executed, causes at least one computer to execute the performing and computing steps described herein, in particular the method 300 as described above with respect to Fig. 3 and the techniques described above with respect to Figs. 1 to 5. Such a computer program product may include a readable non-transitory storage medium storing program code thereon for use by a computer. The program code may perform the method 300 as described above with respect to Figure 3.

While a particular feature or aspect of the disclosure may have been disclosed with respect to only one of several implementations, such feature or aspect may be combined with one or more other features or aspects of the other implementations as may be desired and advantageous for any given or particular application. Furthermore, to the extent that the terms "include", "have", "with", or other variants thereof are used in either the detailed description or the claims, such terms are intended to be inclusive in a manner similar to the term "comprise". Also, the terms "exemplary", "for example" and "e.g." are merely meant as an example, rather than the best or optimal. The terms "coupled" and "connected", along with derivatives may have been used. It should be understood that these terms may have been used to indicate that two elements cooperate or interact with each other regardless whether they are in direct physical or electrical contact, or they are not in direct contact with each other.

Although specific aspects have been illustrated and described herein, it will be appreciated by those of ordinary skill in the art that a variety of alternate and/or equivalent implementations may be substituted for the specific aspects shown and described without departing from the scope of the present disclosure. This application is intended to cover any adaptations or variations of the specific aspects discussed herein.

Although the elements in the following claims are recited in a particular sequence with corresponding labeling, unless the claim recitations otherwise imply a particular sequence for implementing some or all of those elements, those elements are not necessarily intended to be limited to being implemented in that particular sequence.

The scope of the invention is defined by the appended claims.

## Claims

1. An augmented reality, AR, communication system (100), comprising:
an AR interaction device (101) configured to capture reality data (102);
a back-end computer server (105) configured to process at least part of the reality data (102) to provide augmented reality, AR, data (104); and
a real-time wide area network, WAN, (103) coupled between the AR interaction device (101) and the back-end computer server (105), wherein the real-time WAN is configured to transfer the at least part of the captured reality data (102) to the back-end computer server (105) and return the AR data (104) to the AR interaction device (101) in real-time,
wherein the AR interaction device (101) is configured to provide a user (107) of the AR interaction device (101) with information (106) based on the reality data (102) enriched with the AR data (104), **characterized in that** the AR communication system (100, 200) further comprises:
at least one second AR interaction device configured to capture at least one second reality data,
wherein the real-time WAN is configured to transfer at least part of the captured at least one second reality data to the back-end computer server (105),
wherein the back-end computer server (105) is configured to process at least part of the at least one second reality data to provide at least one second augmented reality, AR, data,
wherein the AR interaction device (101) is configured to provide the user (107) with information (106) based on the reality data (102) enriched with the AR data (104) and further enriched with the at least one second reality data and/or the at least one second AR data.

2. The AR communication system (100) of claim 1,
wherein the WAN (103) is a multi-hop network comprising multiple network nodes (111, 112) in a network path (110) between the AR interaction device (101) and the back-end computer server (105).

3. The AR communication system (100) of claim 1 or 2, comprising:
a 5G communication network coupled between the AR interaction device (101) and the back-end computer server (105) to implement the real-time WAN (103).

4. The AR communication system (100) of one of the preceding claims,
wherein the real-time WAN (103) is a low-latency data network having a latency in a range of 1 milliseconds to 10 milliseconds.

5. The AR communication system (100) of one of the preceding claims,
wherein the AR interaction device (101) comprises a controller configured to control the transfer of the at least part of the captured reality data (102) to the back-end computer server (105) and to control reception of the returned AR data (104),
wherein the controller is further configured to control providing the user (107) with the information (106) based on the reality data (102) enriched with the AR data (104).

6. The AR communication system (100, 200) of one of the preceding claims,
wherein the AR interaction device (101) comprises a processor (203) configured to pre-process the captured reality data (102) before providing it to the back-end computer server (105) and/or to post-process the returned AR data (104) before providing it to the user (107).

7. The AR communication system (100, 200) of one of the preceding claims,
wherein the AR interaction device (101) comprises AR glasses configured to capture a real image (102) and to provide the user (107) with the real image (102) augmented by a virtual image (104) which is provided by the back-end computer server (105) based on the real image (102).

8. The AR communication system (100, 200) of claim 7,
wherein the AR glasses comprise a screen configured to display the real image (102) augmented by the virtual image (104) as an AR image (106).

9. The AR communication system (100, 200) of claim 8,
wherein the AR glasses comprise a processor (203) configured to pre-process the real image (102) based on feature extraction and to provide the extracted features to the back-end computer server (105),
wherein the processor (203) is further configured to render the AR image (106) before displaying it on the screen.

10. The AR communication system (100, 200) of claim 9,
wherein the back-end computer server (105) is configured to process the pre-processed real image (102) with respect to head and body tracking to provide a stable AR image (106).

11. The AR communication system (100, 200) of one of the preceding claims,
wherein the back-end computer server (105) is configured to process the reality data (102) by using at least one of the following tools: image recognition tools, image data processing tools, image marking tools, artificial intelligence tools, data base tools, satellite navigation tools.

12. The AR communication system (100, 200) of one of the preceding claims,
wherein the captured reality data (102) comprises at least one of the following data: data streams, data samples, video streams, single images, ultrasonic streams, infrared streams, temperature data, pressure data, gyroscope data, accelerometer data, magnetometer data.

13. An augmented reality, AR, interaction device (101) for providing a user (107) with augmented reality, AR, information (106), the AR interaction device (101) comprising:
a processor (203) configured to capture reality data (102); and
a data interface (205) configured to couple the processor (203) with a back-end computer server (105) via a real-time wide area network, WAN, (103) for transferring at least part of the reality data (102) to the back-end computer server (105) and receiving augmented reality, AR, data (104) derived from the at least part of the reality data (102) in real-time,
wherein the processor (203) is configured to provide the user (107) with information (106) based on the reality data (102) enriched with the AR data (104),
**characterized in that** the data interface (205) is further configured to receive at least one second reality data and/or at least one second AR data of at least one second AR interaction device,
wherein the processor (203) is configured to provide the user (107) with information (106) based on the reality data (102) enriched with the AR data (104) and further enriched with the at least one second reality data and/or the at least one second AR data.

14. The AR interaction device (101) of claim 13, comprising:
AR glasses configured to capture a real image (102) and to provide the user (107) with the real image (102) augmented by a virtual image (104) which is provided by the back-end computer server (105) based on the real image (102).

15. A method (300) for providing a user with augmented reality, AR, information, the method comprising:
capturing (301) reality data by an AR interaction device;
capturing at least one second reality data by at least one second AR interaction device;
transferring (302) at least part of the captured reality data and at least part of the captured at least one second reality data to a back-end computer server in real-time via a real-time wide area network, WAN;
processing (303) the at least part of the reality data and at least part of the at least one second reality data by the back-end computer server to provide AR data and at least one second AR data;
transferring (304) the AR data and the at least one second AR data to the AR interaction device in real-time via the real-time WAN; and
providing (305) the user with information based on the reality data enriched with the AR data and further enriched with the at least one second reality data and/or the at least one second AR data.

## Patentansprüche

1. Augmented-Reality (AR)-Kommunikationssystem (100), umfassend:
eine AR-Interaktionsvorrichtung (101), welche ausgebildet ist, Realitätsdaten (102) zu erfassen;
einen Backendcomputerserver (105), welcher ausgebildet ist, mindestens einen Teil der Realitätsdaten (102) zu verarbeiten, um Augmented-Reality (AR)-Daten (104) bereitzustellen; und
ein Echtzeit-Weitverkehrsnetzwerk, WAN, (103), welches zwischen der AR-Interaktionsvorrichtung (101) und dem Backendcomputerserver (105) eingebunden ist, wobei das Echtzeit-WAN ausgebildet ist, den mindestens einen Teil der erfassten Realitätsdaten (102) an den Backendcomputerserver (105) zu übermitteln und die AR-Daten (104) in Echtzeit an die AR-Interaktionsvorrichtung (101) zurückzusenden,
wobei die AR-Interaktionsvorrichtung (101) ausgebildet ist, einem Nutzer (107) der AR-Interaktionsvorrichtung (101) Informationen (106) basierend auf den Realitätsdaten (102), welche mit den AR-Daten (104) angereichert sind, bereitzustellen, **dadurch gekennzeichnet, dass** das AR-Kommunikationssystem (100, 200) ferner umfasst:
mindestens eine zweite AR-Interaktionsvorrichtung, welche ausgebildet ist, mindestens ein zweites Realitätsdatum aufzunehmen,
wobei das Echtzeit-WAN ausgebildet ist, mindestens einen Teil des mindestens einen zweiten erfassten Realitätsdatums an den Backendcomputerserver (105) zu übertragen,
wobei der Backendcomputerserver (105) ausgebildet ist, mindestens einen Teil des mindestens einen zweiten Realitätsdatums zu verarbeiten, um mindestens ein zweites Augmented-Reality (AR)-Datum bereitzustellen,
wobei die AR-Interaktionsvorrichtung (101) ausgebildet ist, dem Nutzer (107) Informationen (106) basierend auf den Realitätsdaten (102), welche mit den AR-Daten (104) angereichert sind und zusätzlich mit dem mindestens einen zweiten Realitätsdatum und/oder dem mindestens einen zweiten AR-Datum angereichert sind, bereitzustellen.

2. AR-Kommunikationssystem (100) nach Anspruch 1,
wobei das WAN (103) ein Mehrsprungnetzwerk ist, welches mehrere Netzwercknoten (111, 112) in einem Netzwerkpfad (110) zwischen der AR-Interaktionsvorrichtung (101) und dem Backendcomputerserver (105) umfasst.

3. AR-Kommunikationssystem (100) nach Anspruch 1 oder 2, umfassend: ein 5G-Kommunikationsnetzwerk, welches zwischen der AR-Interaktionsvorrichtung (101) und dem Backendcomputerserver (105) zur Umsetzung des Echtzeit-WAN (103) eingebunden ist.

4. AR-Kommunikationssystem (100) nach einem der vorstehenden Ansprüche,
wobei das Echtzeit-WAN (103) ein Niedriglatenzzeitdatennetzwerk ist, welches eine Latenzzeit in einem Bereich von 1 Millisekunde bis 10 Millisekunden hat.

5. AR-Kommunikationssystem (100) nach einem der vorstehenden Ansprüche,
wobei die AR-Interaktionsvorrichtung (101) eine Steuerung umfasst, welche ausgebildet ist, die Übertragung mindestens eines Teils der erfassten Realitätsdaten (102) an den Backendcomputerserver (105) zu steuern und den Empfang der zurückgesandten AR-Daten (104) zu steuern,
wobei die Steuerung ferner ausgebildet ist, das Bereitstellen von den Informationen (106) für den Nutzer (107) basierend auf den Realitätsdaten (102), welche mit den AR-Daten (104) angereichert sind, zu steuern.

6. AR-Kommunikationssystem (100, 200) nach einem der vorstehenden Ansprüche,
wobei die AR-Interaktionsvorrichtung (101) einen Prozessor (203) umfasst, welcher ausgebildet ist, die erfassten Realitätsdaten (102) vorzuverarbeiten, bevor sie dem Backendcomputerserver (105) bereitgestellt werden und/oder die zurückgesandten AR-Daten (104) nachzuverarbeiten, bevor sie dem Nutzer (107) bereitgestellt werden.

7. AR-Kommunikationssystem (100, 200) nach einem der vorstehenden Ansprüche,
wobei die AR-Interaktionsvorrichtung (101) eine AR-Brille umfasst, welche ausgebildet ist, ein Realbild (102) zu erfassen und das Realbild (102), erweitert durch ein virtuelles Bild (104), welches durch den Backendcomputerserver (105) basierend auf dem Realbild (102) bereitgestellt wird, dem Nutzer (107) bereitzustellen.

8. AR-Kommunikationssystem (100, 200) nach Anspruch 7,
wobei die AR-Brille einen Bildschirm umfasst, welcher ausgebildet ist, das Realbild (102), erweitert durch das virtuelle Bild (104), als AR-Bild (106) anzuzeigen.

9. AR-Kommunikationssystem (100, 200) nach Anspruch 8,
wobei die AR-Brille einen Prozessor (203) umfasst, welcher ausgebildet ist, das Realbild (102) basierend auf der Merkmalsextraktion vorzuverarbeiten und die extrahierten Merkmale dem Backendcomputerserver (105) bereitzustellen, wobei der Prozessor (203) ferner ausgebildet ist, das AR-Bild (106), bevor es auf dem Bildschirm angezeigt wird, zu rendern.

10. AR-Kommunikationssystem (100, 200) nach Anspruch 9,
wobei der Backendcomputerserver (105) ausgebildet ist, das vorverarbeitete Realbild (102) in Bezug auf eine Kopf- und Körperverfolgung zu verarbeiten, um ein stabiles AR-Bild (106) bereitzustellen.

11. AR-Kommunikationssystem (100, 200) nach einem der vorstehenden Ansprüche,
wobei der Backendcomputerserver (105) ausgebildet ist, die Realitätsdaten (102) zu verarbeiten, indem mindestens eines der folgenden Werkzeuge verwendet wird: Bilderkennungswerkzeuge, Bilddatenverarbeitungswerkzeuge, Bildmarkierungswerkzeuge, Künstliche-Intelligenz-Werkzeuge, Datenbankwerkzeuge, Satellitennavigationswerkzeuge.

12. AR-Kommunikationssystem (100, 200) nach einem der vorstehenden Ansprüche,
wobei die erfassten Realitätsdaten (102) mindestens eines der folgenden Daten umfasst: Datenströme, Datenabtastwerte, Videoströme, Einzelbilder, Ultraschallströme, Infrarotströme, Temperaturdaten, Druckdaten, Gyroskopdaten, Beschleunigungsmesserdaten, Magnetometerdaten.

13. Augmented-Reality (AR)-Interaktionsvorrichtung (101) zum Bereitstellen von Augmented-Reality (AR)-Informationen (106) für einen Nutzer (107), wobei die AR-Interaktionsvorrichtung (101) umfasst:
einen Prozessor (203), welcher ausgebildet ist, Realitätsdaten (102) zu erfassen; und
eine Datenschnittstelle (205), welche ausgebildet ist, den Prozessor (203) mit einem Backendcomputerserver (105) über ein Echtzeit-Weitverkehrsnetzwerk, WAN, (103), zum Übertragen von mindestens einem Teil der Realitätsdaten (102) an den Backendcomputerserver (105) und zum Empfangen von Augmented-Reality (AR)-Daten (104), welche von mindestens einem Teil der Realitätsdaten (102) in Echtzeit abgeleitet sind, zu verbinden,
wobei der Prozessor (203) ausgebildet ist, dem Nutzer (107) Informationen (106) basierend auf den Realitätsdaten (102), welche mit den AR-Daten (104) angereichert sind, bereitzustellen,
**dadurch gekennzeichnet, dass** die Datenschnittstelle (205) ferner ausgebildet ist, mindestens ein zweites Realitätsdatum und/oder mindestens ein zweites AR-Datum von mindestens einer zweiten AR-Interaktionsvorrichtung zu empfangen,
wobei der Prozessor (203) ausgebildet ist, dem Nutzer (107) Informationen (106) basierend auf den Realitätsdaten (102), welche mit den AR-Daten (104) angereichert sind und zusätzlich mit dem mindestens einen zweiten Realitätsdatum und/oder dem mindestens einen zweiten AR-Datum angereichert sind, bereitzustellen.

14. AR-Interaktionsvorrichtung (101) nach Anspruch 13, umfassend:
eine AR-Brille, welche ausgebildet ist, ein Realbild (102) zu erfassen und das Realbild (102), welches durch ein virtuelles Bild (104) erweitert ist, welches basierend auf dem Realbild (102) durch den Backendcomputerserver (105) bereitgestellt ist, dem Nutzer (107) bereitzustellen.

15. Verfahren (300) zum Bereitstellen von Augmented-Reality (AR)-Informationen für einen Nutzer, umfassend:
Erfassen (301) von Realitätsdaten durch eine AR-Interaktionsvorrichtung;
Erfassen von mindestens einem zweiten Realitätsdatum durch mindestens eine zweite AR-Interaktionsvorrichtung;
Übertragen (302) von mindestens einem Teil der erfassten Realitätsdaten und mindestens einem Teil des erfassten mindestens einen zweiten Realitätsdatums an einen Backendcomputerserver in Echtzeit über ein Echtzeit-Weitverkehrsnetzwerk, WAN;
Verarbeiten (303) von mindestens einem Teil der Realitätsdaten und mindestens einem Teil des mindestens einen zweiten Realitätsdatums durch den Backendcomputerserver, um AR-Daten und mindestens ein zweites AR-Datum bereitzustellen;
Übertragen (304) der AR-Daten und des mindestens einen zweiten AR-Datums an die AR-Interaktionsvorrichtung in Echtzeit über das Echtzeit-WAN; und
Bereitstellen (305) von Informationen für einen Nutzer basierend auf den Realitätsdaten, welche mit den AR-Daten angereichert sind und zusätzlich mit dem mindestens einen zweiten Realitätsdatum und/oder dem mindestens einen zweiten AR-Datum angereichert sind.

## Revendications

1. Système de communication à réalité augmentée, RA (100), comprenant :
un dispositif d'interaction à réalité augmentée, RA, (101) configuré pour capturer les données de réalité (102) ;
un serveur informatique dorsal (105) configuré pour traiter au moins une partie des données de réalité (102) de sorte à fournir des données de réalité augmentée, RA, (104) ; et
un réseau étendu en temps réel, WAN, (103) couplé entre le dispositif d'interaction à RA (101) et le serveur informatique dorsal (105), le réseau étendu en temps réel étant configuré pour transférer la au moins une partie des données de réalité (102) capturées vers le serveur informatique dorsal (105) et
pour retourner les données de RA (104) vers le dispositif d'interaction à RA (101) en temps réel,
le dispositif d'interaction à RA (101) étant configuré pour fournir à un utilisateur (107) du dispositif d'interaction à RA (101) des informations (106) sur la base des données de réalité (102) enrichies des données de RA (104), **caractérisé en ce que** le système de communication à RA (100, 200) comprend en outre :
au moins un second dispositif d'interaction à RA configuré pour capturer au moins une seconde donnée de réalité,
le réseau étendu en temps réel étant configuré pour transférer au moins une partie de la au moins une seconde donnée de réalité capturées vers le serveur informatique dorsal (105),
le serveur informatique dorsal (105) étant configuré pour traiter au moins une partie de la au moins une seconde donnée de réalité pour fournir au moins une seconde donnée de réalité augmentée, RA,
le dispositif d'interaction à RA (101) étant configuré pour fournir à l'utilisateur (107) des informations (106) sur la base des données de réalité (102) enrichies des données de RA (104) et enrichies en outre de la au moins une seconde donnée de réalité et/ou de la au moins une seconde donnée de RA.

2. Système de communication à RA (100) selon la revendication 1,
le réseau étendu (103) étant un réseau à plusieurs bonds comprenant plusieurs nœuds de réseau (111, 112) dans un chemin de réseau (110) entre le dispositif d'interaction à RA (101) et le serveur informatique dorsal (105).

3. Système de communication à RA (100) selon la revendication 1 ou 2, comprenant :
un réseau de communication 5G couplé entre le dispositif d'interaction à RA (101) et le serveur informatique dorsal (105) pour implémenter le réseau étendu en temps réel (103).

4. Système de communication à RA (100) selon l'une des revendications précédentes,
le réseau étendu en temps réel (103) étant un réseau de données à faible latence ayant une latence comprise entre 1 milliseconde et 10 millisecondes.

5. Système de communication à RA (100) selon l'une des revendications précédentes,
le dispositif d'interaction à RA (101) comprenant un dispositif de commande configuré pour commander le transfert de la au moins une partie des données de réalité capturées (102) vers le serveur informatique dorsal (105) et pour commander la réception des données de RA (104) retournées,
le dispositif de commande étant en outre configuré pour commander la fourniture à l'utilisateur (107) des informations (106) sur la base des données de réalité (102) enrichies des données de RA (104).

6. Système de communication à RA (100, 200) selon l'une des revendications précédentes,
le dispositif d'interaction à RA (101) comprenant un processeur (203) configuré pour pré-traiter les données de réalité (102) capturées avant de les fournir au serveur informatique dorsal (105) et/ou pour post-traiter les données de RA (104) retournées avant de les fournir à l'utilisateur (107).

7. Système de communication à RA (100, 200) selon l'une des revendications précédentes,
le dispositif d'interaction à RA (101) comprenant des lunettes de RA configurées pour capturer une image réelle (102) et pour fournir à l'utilisateur (107) l'image réelle (102) augmentée par une image virtuelle (104) qui est fournie par le serveur informatique dorsal (105) sur la base de l'image réelle (102).

8. Système de communication à RA (100, 200) selon la revendication 7, les lunettes de RA comprenant un écran configuré pour afficher l'image réelle (102) augmentée par l'image virtuelle (104) en tant qu'image de RA (106).

9. Système de communication à RA (100, 200) selon la revendication 8, les lunettes de RA comprenant un processeur (203) configuré pour pré-traiter l'image réelle (102) sur la base de l'extraction de caractristiques et pour fournir les caractristiques extraites au serveur informatique dorsal (105),
le processeur (203) étant en outre configuré pour restituer l'image de RA (106) avant de l'afficher à l'écran.

10. Système de communication à RA (100, 200) selon la revendication 9,
le serveur informatique dorsal (105) étant configuré pour traiter l'image réelle (102) pré-traitée par rapport au suivi de la tête et du corps pour fournir une image de RA (106) stable.

11. Système de communication en RA (100, 200) selon l'une des revendications précédentes,
le serveur d'ordinateur dorsal (105) étant configuré pour traiter les données de réalité (102) à l'aide d'au moins un des outils suivants : outils de reconnaissance d'image, outils de traitement de données d'images, outils de marquage d'images, outils d'intelligence artificielle, outils de base de données, outils de navigation par satellite.

12. Système de communication à RA (100, 200) selon l'une des revendications précédentes,
les données de réalité (102) capturées comprenant au moins l'une des données suivantes : flux de données, échantillons de données, flux vidéo, images uniques, flux ultrasoniques, flux infrarouges, données de température, données de pression, données de gyroscope, données d'accéléromètre, données de magnétomètre.

13. Dispositif d'interaction à réalité augmentée, RA, (101) destiné à fournir à un utilisateur (107) des informations de réalité augmentée, RA, (106), le dispositif d'interaction à RA (101) comprenant :
un processeur (203) configuré pour capturer des données de réalité (102) ; et
une interface de données (205) configurée pour coupler le processeur (203) à un serveur informatique dorsal (105) à travers un réseau étendu en temps réel, WAN, (103) pour transférer au moins une partie des données de réalité (102) vers le serveur informatique dorsal (105) et pour recevoir des données de réalité augmentée, RA, (104) provenant de la au moins une partie des données de réalité (102) en temps réel,
le processeur (203) étant configuré pour fournir à l'utilisateur (107) des informations (106) sur la base des données de réalité (102) enrichies des données de RA (104),
**caractérisé en ce que** l'interface de données (205) est en outre configurée pour recevoir au moins une seconde donnée de réalité et/ou au moins une seconde donnée de RA d'au moins un second dispositif d'interaction à RA,
le processeur (203) étant configuré pour fournir à l'utilisateur (107) des informations (106) sur la base des données de réalité (102) enrichies des données de RA (104) et enrichies en outre de la au moins une seconde donnée de réalité et/ou de la au moins une seconde donnée de RA.

14. Dispositif d'interaction à RA (101) selon la revendication 13, comprenant des lunettes de RA configurées pour capturer une image réelle (102) et pour fournir à l'utilisateur (107) l'image réelle (102) augmentée par une image virtuelle (104) qui est fournie par le serveur informatique dorsal (105) sur la base de l'image réelle (102).

15. Procédé (300) pour fournir à un utilisateur des informations de réalité augmentée, RA, ledit procédé comprenant :
la capture (301) de données de réalité par un dispositif d'interaction à RA ;
la capture de la au moins une seconde donnée de réalité par au moins un second dispositif d'interaction à RA ;
le transfert (302) d'au moins une partie des données de réalité capturées et d'au moins une partie de la au moins une seconde donnée de réalité capturée vers un serveur informatique principal en temps réel à travers un réseau étendu en temps réel, WAN ;
le traitement (303) de l'au moins une partie des données de réalité et d'au moins une partie de la au moins une seconde donnée de réalité par le serveur informatique dorsal pour fournir les données de RA et au moins une seconde donnée de RA,
le transfert (304) des données de RA et de la au moins une seconde donnée de RA vers le dispositif d'interaction à RA en temps réel à travers le réseau étendu en temps réel ; et
la fourniture (305) à l'utilisateur d'informations sur la base des données de réalité enrichies des données de RA et enrichies en outre de la au moins une seconde donnée de réalité et/ou de la au moins une seconde donnée de réalité augmentée.
